# FASCICULE DE BREVET EUROPEEN

(11) **EP 1 568 580 B1**
(45) Date de publication et mention de la délivrance du brevet: **26.12.2007**
(21) Numéro de dépôt: 05300113.7
(22) Date de dépôt: 14.02.2005
(51) Int. Cl.: B62D 25/18, B62D 65/00, B60Q 1/04

(54) **Aile de carrosserie de véhicule automobile en matière plastique pourvue d'un dispositif d'indexage**
Kraftfahrzeugkarosserie-Kotflügel aus Kunststoff mit einer Indexierungsvorrichtung
Motor vehicle body side wing in plastic material provided with an indexing device

(30) Priorité: 26.02.2004 FR 0401941
(43) Date de publication de la demande: 31.08.2005
(73) Titulaire: Renault, 92109 Boulogne Billancourt (FR)
(72) Inventeur: Boucherit, Kaci, 92250, La Garenne Colombes (FR); Herme-Guizon, Xavier, 92600, Asnières (FR); Roulie, Annick, 75012, Paris (FR)

(56) Documents cités:
- EP-A- 1 050 431
- DE-A- 19 615 026
- DE-U- 9 007 203

## Description

L'invention concerne une aile de carrosserie de véhicule automobile en matière plastique selon le préambule de la revendication 1.

L'invention concerne également un ensemble pour véhicule automobile formé d'une aile de carrosserie selon l'invention et d'un projecteur adjacent.

Les carrosseries des véhicules automobiles comprennent actuellement de plus en plus de parties en matière plastique, par exemple en Noryl, telles que les ailes du véhicule.

La réalisation d'une aile en matière plastique peut poser des problèmes au niveau des interfaces entre l'aile et un autre élément du véhicule. Par exemple, dans le cas d'une aile avant de véhicule, l'aile s'étend en partie le long du projecteur, plus précisément le long du boîtier du projecteur et d'une partie de la glace du projecteur invisible de l'extérieur du véhicule. L'aile est également disposée de manière à s'étendre dans le prolongement d'une partie visible de la glace afin que la glace et l'aile forment une surface externe sensiblement continue. Cependant, sous l'effet de fortes chaleurs ou d'un froid intense, l'aile subit des variations dimensionnelles qui provoquent un désaffleurement entre l'aile et le projecteur. Il est alors nécessaire de prévoir un rebord le long du bord de l'aile adjacent au projecteur afin d'éviter la formation d'un espace trop important entre l'aile et le projecteur. Toutefois, le bord de l'aile étant très proche de la partie invisible de la glace, et le rebord étant dirigé en direction de celle-ci, il faut prévoir un espace au niveau de la glace, entre ses parties visible et invisible, pour loger au moins en partie le rebord afin de maintenir l'aile dans le prolongement de la partie visible de la glace. Un tel agencement est particulièrement compliqué à réaliser au niveau de la glace, notamment par moulage. Il est tout aussi complexe de réaliser par moulage un rebord plus proche de la face interne de l'aile.

Dans le document DE 90 07 203 U, il est proposé une aile de carrosserie comportant une nervure supportant un dispositif d'indexage. Le dispositif d'indexage est apte à recevoir un doigt d'indexage d'un projecteur de phare. Un joint d'étanchéité remplit le jeu existant entre le projecteur et la face avant de la nervure.

L'invention vise à pallier ces inconvénients en proposant une aile pourvue d'un dispositif d'indexage permettant de positionner le bord de l'aile correctement par rapport à un élément du véhicule de manière à limiter le désaffleurement entre l'élément et l'aile dû à la dilatation, ou à la contraction, thermique de l'aile. Le dispositif d'indexage permet de s'affranchir de la réalisation d'un rebord au niveau du bord de l'aile, simplifiant ainsi la fabrication de l'aile et de l'élément.

A cet effet, l'objet de l'invention concerne une aile de carrosserie de véhicule automobile en matière plastique pourvue d'au moins un dispositif d'indexage de l'aile par rapport à un autre élément du véhicule le long duquel s'étend une partie de l'aile, le dispositif d'indexage comprenant une pièce d'indexage supportée par une nervure venue de matière avec, et faisant saillie de, la face interne de l'aile, la pièce d'indexage étant apte à coopérer avec une partie de l'élément afin de positionner l'aile par rapport à cet élément. L'invention est caractérisée en ce que la nervure est réalisée à une distance du bord de l'aile de manière à ce que ledit bord épouse la forme d'une partie de l'autre élément pour la cacher lorsque l'aile et l'autre élément sont montés sur un véhicule équipé.

Le dispositif d'indexage est placé de manière à positionner une extrémité de l'aile à une distance prédéterminée de l'élément. Cette distance est par exemple déterminée afin de permettre à l'aile de former une surface sensiblement continue avec une surface adjacente, en réduisant au minimum un désaffleurement.

Avantageusement, la pièce d'indexage présente un orifice apte à recevoir un doigt d'indexage solidaire de l'élément.

Avantageusement, la pièce d'indexage présente une zone susceptible de se rompre en cas de choc afin de limiter la transmission d'efforts entre l'élément et l'aile. Une telle structure permet de limiter la détérioration de l'aile en cas de choc, limitant ainsi les réparations à effectuer.

L'invention concerne également un ensemble pour véhicule automobile formé d'une aile de carrosserie selon l'invention et d'un projecteur adjacent comprenant une glace supportée par un boîtier, dans lequel une partie de l'extrémité de l'aile s'étend à proximité du boîtier et d'une partie de la glace du projecteur, le dispositif d'indexage étant agencé de manière à coopérer avec le projecteur afin de positionner l'extrémité de l'aile à une distance prédéterminée du projecteur.

Avantageusement, le dispositif d'indexage est agencé de manière à maintenir un jeu minimal entre un bord de l'aile et une partie de la glace du projecteur.

Avantageusement, la pièce d'indexage coopère avec un doigt d'indexage situé sur la face arrière du boîtier de manière à positionner l'extrémité de l'aile par rapport à la glace du projecteur.

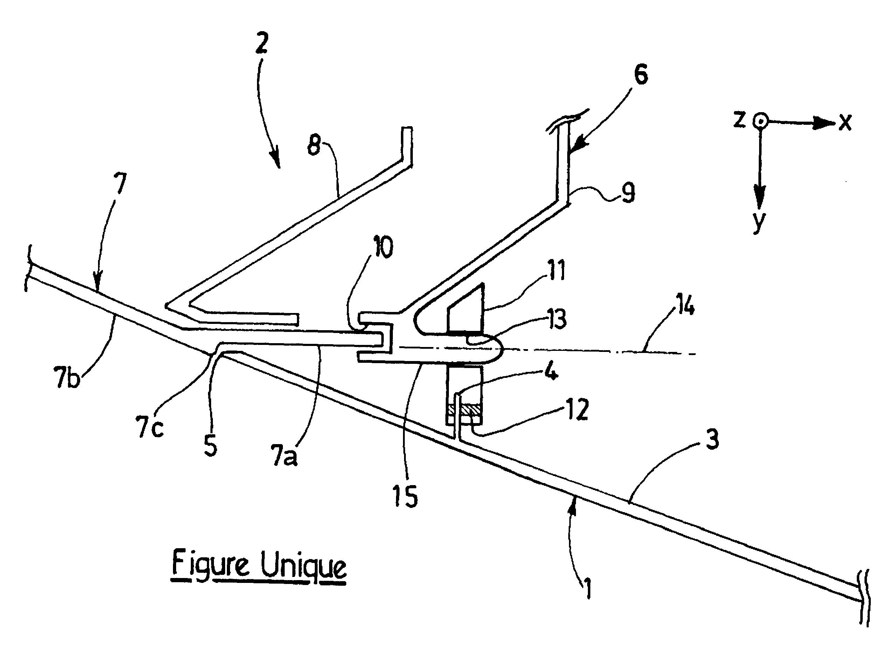

L'invention est maintenant décrite en référence au dessin annexé, non limitatif, dans lequel la figure unique est une vue en coupe suivant un plan horizontal XY d'une aile avant de carrosserie selon l'invention.

Dans la description, les termes "avant", "arrière" se réfèrent à l'avant et l'arrière d'un véhicule automobile respectivement. Les directions X, Y, Z représentent les directions longitudinale, transversale, et verticale du véhicule.

La figure représente partiellement une aile avant de carrosserie automobile, et plus précisément son extrémité avant 1, et un projecteur 2. Seules les parties voisines de l'aile et du projecteur sont représentées, l'aile s'étendant à une distance relativement faible du projecteur suivant la direction transversale Y du véhicule.

La face interne de l'aile 3, dirigée vers l'intérieur du véhicule, est pourvue d'une nervure 4. L'aile étant en matière plastique, par exemple en Noryl, la nervure 4 est venue de matière avec la face interne 3. Elle est par exemple réalisée lors du moulage de l'aile. La nervure 4 forme un plan saillant de la face interne 3 et s'étendant sensiblement suivant un plan vertical transversal au véhicule. La nervure est réalisée à une distance prédéterminée du bord avant 5 de l'aile, lequel s'étend sensiblement verticalement. L'aile est fixée à la structure du véhicule de manière classique par des moyens qui ne sont pas représentés.

Le projecteur 2 est réalisé de manière classique. Sur la figure, ne sont représentés partiellement que son boîtier 6 supportant une glace 7 et un masque 8. Le boîtier 6 est fixé d'une manière connue en soi à la structure du véhicule (non représentée) de sorte que son fond 9, dirigé vers l'arrière du véhicule, s'étende, au moins en partie, dans un plan sensiblement transversal et vertical.

La glace 7 présente une partie 7a qui s'étend sensiblement suivant la direction longitudinale X du véhicule, vers l'arrière, et qui est supportée dans une rainure 10 formée sur un bord du boîtier. La partie 7a de la glace est prolongée vers l'avant du véhicule par une partie 7b visible de l'extérieur du véhicule, inclinée par rapport à la partie 7a. La partie visible 7b de la glace présente, au niveau de sa jonction avec la partie cachée 7a, un bord 7c dirigé vers l'extérieur du véhicule et s'étendant sensiblement verticalement.

Le bord 5 de l'aile est conformé de manière à épouser la forme du bord 7c lorsque l'aile et le projecteur sont montés sur la structure du véhicule. La partie cachée 7a et le boîtier 6 sont alors cachés par l'aile.

La nervure 4 est réalisée à une distance suffisante du bord 5 de l'aile afin d'être située sensiblement au niveau du fond 9 du boîtier, suivant la direction longitudinale du véhicule, lorsque l'aile est montée. La nervure 4 peut alors supporter une pièce d'indexage 11 apte à coopérer avec un doigt d'indexage 15 solidaire du fond du boîtier 9. Le doigt d'indexage s'étend sensiblement suivant la direction longitudinale X, vers l'arrière du véhicule. Cette pièce d'indexage peut être réalisée en métal ou matière plastique. La pièce d'indexage et la nervure forment un dispositif d'indexage de l'aile permettant de positionner cette dernière par rapport au projecteur.

Dans l'exemple, la pièce d'indexage 11 s'étend suivant un plan vertical et transversal YZ. Elle présente une fente dans laquelle vient s'insérer la nervure 4 à laquelle elle est fixée au moyen de vis 12 ou analogues. La pièce d'indexage 11 présente un orifice 13 destiné à recevoir le doigt d'indexage 15. La pièce 11 est conçue de manière à ce que, lorsqu'elle est fixée sur la nervure 4, l'axe 14 de l'orifice 13 s'étende sensiblement parallèlement à la direction longitudinale X du véhicule. L'orifice 13 présente une dimension prédéterminée suivant la direction transversale Y du véhicule, qui correspond sensiblement à la dimension du doigt d'indexage 15 dans cette même direction. Les autres dimensions de l'orifice sont choisies de manière à ne pas induire de forces sur le doigt d'indexage dans d'autres directions.

Ainsi, lorsque le doigt d'indexage 15 est dans l'orifice 13, la pièce d'indexage 11, fixée sur la nervure 4, maintient l'extrémité de l'aile 1 à une distance prédéterminée du projecteur 2 suivant la direction transversale Y. La distance entre l'aile et le projecteur est ainsi contrôlée, et en particulier, le jeu, suivant cette direction Y, entre le bord 5 de l'aile et la partie cachée 7a de la glace peut être réduit au minimum en choisissant des dimensions appropriées de la pièce d'indexage et du doigt d'indexage. De préférence, la pièce d'indexage est conçue de sorte que l'extrémité de l'aile 1 s'étende dans le prolongement de la partie visible 7a de la glace afin de former une surface sensiblement continue avec celle-ci, sans désaffleurement entre les surfaces contiguës.

Il n'est ainsi pas nécessaire de prévoir un rebord au niveau du bord de l'aile, ce dernier étant maintenu à très faible distance de la glace par le dispositif d'indexage. Au contraire, il est désormais possible d'amincir le bord de l'aile. Par exemple, la face interne de l'aile 3, au niveau du bord 5, peut être biseautée (finition de type goutte d'eau) tel que représenté sur la figure. L'épaisseur du bord 5 est ainsi réduite ce qui permet de maintenir un jeu minimal entre la partie cachée 7a de la glace et le bord 5 de l'aile suivant la direction transversale Y, tout en maintenant l'aile dans le prolongement de la partie visible 7b de la glace du projecteur. Ce jeu minimal est suffisant pour permettre une dilatation ou une contraction du bord de l'aile sans toutefois provoquer le désaffleurement entre l'aile et la partie visible 7b de la glace, en raison de la faible épaisseur du bord 5 de l'aile.

D'autres modes de réalisation de la pièce d'indexage peuvent être envisagés en fonction de la matière de la pièce.

Lorsque de la matière plastique est utilisée, la pièce d'indexage peut être réalisée comme une agrafe présentant deux parties venant se clipser l'une sur l'autre et entre lesquelles est pincée la nervure. Des orifices prévus dans la nervure assurent un bon positionnement de l'agrafe et le passage des doigts de clipsage, et éventuellement d'un doigt de positionnement, de sorte que l'agrafe ne peut facilement se détacher de la nervure. Une des deux parties porte alors une troisième partie orientée convenablement pour coopérer avec une partie correspondante du projecteur. La réalisation de la pièce d'indexage en matière plastique, en particulier la même matière plastique que l'aile, permet de faciliter le recyclage de l'aile en évitant d'avoir à démonter la pièce avant recyclage.

Une pièce d'indexage métallique peut également être conçue comme une agrafe. Elle peut par exemple être chaussée en force sur la nervure et maintenue en place par des pointes dirigées vers le bord libre de la nervure qui pénètrent dans la nervure. Il est toutefois alors nécessaire d'utiliser une pièce de calibrage pour positionner correctement l'agrafe, cette dernière ne comportant pas de doigt de positionnement coopérant avec un orifice de la nervure. La région supportant la partie de l'agrafe coopérant avec une partie correspondante du projecteur est alors orientée convenablement. Elle peut éventuellement être décalée par rapport à la partie de l'agrafe en prise avec la nervure.

De préférence, la pièce d'indexage 11 présente une zone de faiblesse (non représentée) de manière à permettre une rupture sous l'effet de chocs importants suivant la direction longitudinale X du véhicule. Une telle conception permet de limiter la transmission du choc du projecteur à l'aile et de limiter ainsi la détérioration de l'aile. Cette zone de faiblesse est par exemple située entre l'orifice 13 et la partie fixée à la nervure 4, ou bien la fixation de la pièce d'indexage sur la nervure peut être conçue de manière à céder sous l'effet de tels chocs. On pourrait de même prévoir une zone de faiblesse afin de permettre la rupture de la pièce sous l'effet de chocs transversaux, ou encore, la zone de faiblesse pourrait être prévue sur le doigt d'indexage.

Dans l'exemple, la nervure et la pièce d'indexage s'étendent sensiblement dans un même plan contenant la direction d'indexage souhaitée, à savoir la direction transversale du véhicule. La direction de la nervure 4 s'étend toutefois généralement dans la direction de démoulage de l'aile de sorte qu'elle peut s'étendre dans un plan ne contenant pas la direction d'indexage. La pièce d'indexage doit alors être conçue de manière à permettre une orientation convenable de l'orifice destiné à recevoir le doigt d'indexage, par exemple en inclinant la partie supportant l'orifice de manière adéquate. Dans le cas d'une pièce d'indexage en métal, on peut envisager le réglage de l'orientation de la pièce d'indexage au moment du montage, par exemple en pliant la pièce, pour un ajustage plus précis.

De préférence, la nervure 4 s'étend uniquement sur une partie de l'aile sensiblement en regard du projecteur. Elle pourrait toutefois s'étendre sur une longueur plus grande ou plus faible.

Bien entendu, dans un autre mode de réalisation, la pièce d'indexage pourrait comporter au lieu d'un orifice 13, un doigt d'indexage coopérant avec un orifice prévu dans le fond du projecteur.

Dans l'exemple, la direction d'indexation s'étend suivant la direction transversale Y du véhicule. Cette direction peut toutefois être différente en fonction de la position relative des pièces à positionner. Par ailleurs, on pourrait également prévoir une indexation suivant plus d'une direction.

L'invention a été décrite en référence au positionnement d'une aile avant par rapport à un projecteur de véhicule automobile, elle pourrait toutefois être adaptée au positionnement d'une aile avec un autre élément du véhicule voisin de l'aile, le dispositif d'indexage pouvant par exemple coopérer avec une partie de la structure du véhicule. Par ailleurs, le projecteur pourrait présenter une forme différente de celle décrite.

Il est également possible d'envisager plusieurs dispositifs d'indexage sur une même aile, coopérant avec un ou plusieurs éléments.

## Revendications

1. Aile de carrosserie de véhicule automobile en matière plastique pourvue d'au moins un dispositif d'indexage de l'aile par rapport à un autre élément (2) du véhicule le long duquel s'étend une partie de l'aile, le dispositif d'indexage comprenant une pièce d'indexage (11) supportée par une nervure (4) venue de matière avec, et faisant saillie de, la face interne de l'aile (3), la pièce d'indexage étant apte à coopérer avec une partie de l'élément (6, 15) afin de positionner l'aile par rapport à cet élément (2), **caractérisée en ce que** la nervure (4) est réalisée à une distance du bord (5) de l'aile de manière à ce que ledit bord épouse la forme d'une partie (7a) de l'autre élément (2) pour la cacher lorsque l'aile et cet élément sont montés sur un véhicule équipé.

2. Aile de carrosserie selon la revendication 1, **caractérisée en ce que**, au cas où l'autre élément est un projecteur de phare (2), la nervure (4) est située à une distance suffisante du bord (5) de l'aile afin d'être située sensiblement au fond (9) du boîtier (6) de projecteur suivant la direction longitudinale du véhicule lorsque l'aile est montée.

3. Aile de carrosserie selon l'une quelconque des revendications précédentes, **caractérisée en ce que** la pièce d'indexage (11) présente un orifice (13) apte à recevoir un doigt d'indexage (15) solidaire de l'élément (2).

4. Aile de carrosserie selon l'une quelconque des revendications précédentes, **caractérisée en ce que** la pièce d'indexage (11) présente une zone susceptible de se rompre en cas de choc afin de limiter la transmission d'efforts entre l'élément (2) et l'aile (1).

5. Ensemble pour véhicule automobile formé d'une aile de carrosserie selon l'une des revendications 1 à 4 et d'un projecteur adjacent (2) comprenant une glace (7) supportée par un boîtier (6), dans lequel une partie de l'extrémité de l'aile (1) s'étend à proximité du boîtier (6) et d'une partie de la glace (7a) du projecteur, le dispositif d'indexage (4, 11) étant agencé de manière à coopérer avec le projecteur (2) afin de positionner l'extrémité de l'aile (1) à une distance prédéterminée du projecteur (2).

6. Ensemble selon la revendication 5, dans lequel le dispositif d'indexage (4, 11) est agencé de manière à maintenir un jeu minimal entre un bord de l'aile (5) et une partie de la glace (7a) du projecteur.

7. Ensemble selon la revendication 5 ou 6, **caractérisé en ce que** le dispositif d'indexage (4, 11) est agencé de manière à maintenir l'extrémité de l'aile (1) sensiblement dans le prolongement d'une face externe adjacente d'une autre partie de la glace (7b) du projecteur.

8. Ensemble selon l'une des revendications 5 à 7, **caractérisé en ce que** la pièce d'indexage (11) coopère avec un doigt d'indexage (15) situé sur la face arrière (9) du boîtier de manière à positionner l'extrémité de l'aile (1) par rapport à la glace (7) du projecteur.

## Claims

1. Body wing of a motor vehicle, made from plastics material and provided with at least one device for indexing the wing with respect to another element (2) of the vehicle along which part of the wing extends, the indexing device comprising an indexing part (11) supported by a rib (4) made in one piece with, and projecting from, the inner face of the wing (3), the indexing part being capable of interacting with part of the element (6, 15) in order to position the wing with respect to this element (2), **characterized in that** the rib (4) is formed at a distance from the edge (5) of the wing in such a way that the said edge mates with the shape of a part (7a) of the other element (2) in order to conceal it when the wing and this element are mounted on a vehicle fitted with the components.

2. Body wing according to Claim 1, **characterized in that**, if the other element is a headlight projector (2), the rib (4) is located at a distance from the edge (5) of the wing such that it is located substantially at the back (9) of the projector casing (6) in the longitudinal direction of the vehicle when the wing is fitted.

3. Body wing according to either of the preceding claims, **characterized in that** the indexing part (11) has an aperture (13) for receiving an indexing pin (15) fixed to the element (2).

4. Body wing according to any one of the preceding claims, **characterized in that** the indexing part (11) has an area which can break in case of impact, in order to limit the transmission of forces between the element (2) and the wing (1).

5. Assembly for a motor vehicle, formed by a body wing according to any one of Claims 1 to 4 and an adjacent projector (2) comprising a lens (7) supported by a casing (6), in which part of the end of the wing (1) extends in the proximity of the casing (6) and in part of the projector lens (7a), the indexing device (4, 11) being arranged so as to interact with the projector (2) in order to position the end of the wing (1) at a predetermined distance from the projector (2).

6. Assembly according to Claim 5, in which the indexing device (4, 11) is arranged so as to maintain a minimum clearance between an edge of the wing (5) and part of the projector lens (7a).

7. Assembly according to Claim 5 or 6, **characterized in that** the indexing device (4, 11) is arranged so as to maintain the end of the wing (1) substantially in the continuation of an adjacent outer face of another part of the projector lens (7b).

8. Assembly according to any one of Claims 5 to 7, **characterized in that** the indexing part (11) interacts with an indexing pin (15) located on the rear face (9) of the casing so as to position the end of the wing (1) with respect to the projector lens (7).

## Patentansprüche

1. Kraftfahrzeug-Kotflügel aus Kunststoff, der mit mindestens einer Vorrichtung zur Indexierung des Kotflügels bezüglich eines anderen Elements (2) des Fahrzeugs versehen ist, entlang dessen sich ein Teil des Kotflügels erstreckt, wobei die Indexierungsvorrichtung ein Indexierteil (11) aufweist, das von einer Rippe (4) getragen wird, die aus einem Stück mit der Innenseite (3) des Kotflügels und von diesem vorstehend hergestellt ist, wobei das Indexierteil in der Lage ist, mit einem Bereich des Elements (6, 15) zusammenzuwirken, um den Kotflügel bezüglich dieses Elements (2) zu positionieren, **dadurch gekennzeichnet, dass** die Rippe (4) in Abstand zum Rand (5) des Kotflügels hergestellt ist, damit der Rand sich an die Form eines Bereichs (7a) des anderen Elements (2) anpasst, um ihn zu verdecken, wenn der Kotflügel und dieses Element auf ein ausgestattetes Fahrzeug montiert sind.

2. Kotflügel nach Anspruch 1, **dadurch gekennzeichnet, dass** in dem Fall, in dem das andere Element ein Scheinwerfer (2) ist, die Rippe (4) sich in einem ausreichend Abstand zum Rand (5) des Kotflügels befindet, um sich im Wesentlichen am Boden (9) des Scheinwerfergehäuses (6) in Längsrichtung des Fahrzeugs zu befinden, wenn der Kotflügel montiert ist.

3. Kotflügel nach einem der vorhergehenden Ansprüche, **dadurch gekennzeichnet, dass** das Indexierteil (11) eine Öffnung (13) aufweist, die einen Indexierfinger (15) aufnehmen kann, der fest mit dem Element (2) verbunden ist.

4. Kotflügel nach einem der vorhergehenden Ansprüche, **dadurch gekennzeichnet, dass** das Indexierteil (11) eine Zone aufweist, die im Fall eines Stoßes brechen kann, um die Kraftübertragung zwischen dem Element (2) und dem Kotflügel (1) zu begrenzen.

5. Einheit für ein Kraftfahrzeug, die aus einem Kotflügel nach einem der Ansprüche 1 bis 4 und aus einem benachbarten Scheinwerfer (2) besteht, der ein Glas (7) aufweist, das von einem Gehäuse (6) getragen wird, bei der ein Bereich des Endes des Kotflügels (1) sich in der Nähe des Gehäuses (6) und eines Bereichs des Glases (7a) des Scheinwerfers erstreckt, wobei die Indexiervorrichtung (4, 11) angeordnet ist, um mit dem Scheinwerfer (2) zusammenzuwirken, um das Ende des Kotflügels (1) in einem vorbestimmten Abstand zum Scheinwerfer (2) zu positionieren.

6. Einheit nach Anspruch 5, bei der die Indexiervorrichtung (4, 11) angeordnet ist, um ein minimales Spiel zwischen einem Rand des Kotflügels (5) und einem Bereich (7a) des Glases des Scheinwerfers aufrechtzuerhalten.

7. Einheit nach Anspruch 5 oder 6, **dadurch gekennzeichnet, dass** die Indexiervorrichtung (4, 11) angeordnet ist, um das Ende des Kotflügels (1) im Wesentlichen in der Verlängerung einer benachbarten Außenseite eines anderen Bereichs (7b) des Glases des Scheinwerfers zu halten.

8. Einheit nach einem der Ansprüche 5 bis 7, **dadurch gekennzeichnet, dass** das Indexierteil (11) mit einem Indexierfinger (15) zusammenwirkt, der sich an der Rückseite (9) des Gehäuses befindet, um das Ende des Kotflügels (1) bezüglich des Glases (7) des Scheinwerfers zu positionieren.
